# EUROPÄISCHE PATENTSCHRIFT

(11) **EP 1 864 348 B1**
(45) Veröffentlichungstag und Bekanntmachung des Hinweises auf die Patenterteilung: **23.04.2014**
(21) Anmeldenummer: 06706648.0
(22) Anmeldetag: 31.01.2006
(51) Int. Cl.: H01M 8/02, H01M 8/04, B01D 19/00

(54) **VORRICHTUNG MIT EINEM EIN MEDIUM FÜHRENDEN KANAL UND VERFAHREN ZUR ENTFERNUNG VON EINSCHLÜSSEN**
DEVICE COMPRISING A CHANNEL CARRYING A MEDIUM AND METHOD FOR REMOVING INCLUSIONS
DISPOSITIF COMPRENANT UN CANAL QUI ACHEMINE UNE SUBSTANCE, ET PROCEDE POUR ELIMINER DES INCLUSIONS

(30) Priorität: 31.01.2005 DE 102005005231
(43) Veröffentlichungstag der Anmeldung: 12.12.2007
(73) Patentinhaber: Fraunhofer-Gesellschaft zur Förderung der angewandten Forschung e.V., 80686 München (DE)
(72) Erfinder: LITTERST, Christian, 60487 Frankfurt am Main (DE); KOLTAY, Peter, 79117 Freiburg (DE); ECCARIUS, Steffen, 79106 Freiburg (DE)
(74) Vertreter: Pfenning, Meinig & Partner GbR
(86) Internationale Anmeldenummer: PCT/EP2006/000990
(87) Internationale Veröffentlichungsnummer: WO 2006/082087

(56) Entgegenhaltungen:
- EP-A- 0 977 032
- EP-A- 1 480 284
- JP-A- 3 276 569
- JP-A- 5 049 809
- JP-A- 60 032 255
- US-A- 6 130 098

## Beschreibung

Die Erfindung betrifft eine Vorrichtung mit einem ein strömbares Medium, also typischerweise eine Flüssigkeit oder auch ein Gas, führenden Kanal, bei der ein bestimmungsgemäßer Betrieb und/oder eine Wartung mit einer Bildung von Einschlüssen in dem Kanal verbunden ist, und bei der es sich um einen chemischen Reaktor oder Mikroreaktor oder um einen Bestandteil eines chemischen Reaktors oder Mikroreaktors handelt. Die Erfindung betrifft ferner ein Verfahren zur Entfernung von Einschlüssen aus einer entsprechenden Vorrichtung.

Bei der Vorrichtung kann es sich beispielsweise um eine Brennstoffzelle, einen Stromabnehmer oder eine Bipolarplatte für eine Brennstoffzelle, einen Brennstoffzellenstapel handeln. Die Druckschrift EP1 480 284 A1 zeigt einen derartigen Brennstoffzellenstapel, bei dem Kanäle zum Transport von Reaktanden und Reaktionsprodukten mit längs der Kanäle sich änderndem Querschnitt ausgeführt sind, um eine sich ändernde Konzentration der Reaktanden auszugleichen. Die Druckschrift JP 05 049809 A wiederum zeigt in einem anderen Zusammenhang Kanäle mit ähnlichen Querschnittsänderungen, die eine Trennung von verschiedenen Phasen unter Ausnutzung von Kapillarkräften erlauben.

Das Problem eingeschlossener Gas- oder Flüssigkeitsblasen in fluidischen Strukturen und insbesondere in chemischen Reaktoren und Mikroreaktoren lässt sich auf verschiedene Ursachen zurückführen. Einerseits können Gasblasen durch eine schlechte Belüftung eines Systems oder durch eine ungünstige geometrische Auslegung entstehen und im System verbleiben. Andererseits können Einschlüsse eines Gases oder eines anderen vom durch den Kanal geführten Medium unterscheidbaren Fluids nicht nur bei einer Wartung, sondern auch bei einem bestimmungsgemäßen Betrieb einer derartigen Vorrichtung entstehen. Als Beispiele können das Ausgasen einer Flüssigkeit durch Erhitzen und eine reaktionsbedingte Gasbildung in chemischen Reaktoren genannt werden. Ein wichtiges Beispiel einer Anwendung, bei der Gas freigesetzt wird, ist durch Brennstoffzellen gegeben. So entsteht beispielsweise bei einer Direkt-Methanol-Brennstoffzelle anodenseitig CO₂.

Eine Bildung von Einschlüssen beschriebener Art ist zwar häufig nicht zu vermeiden, in aller Regel aber nachteilig, weil die Einschlüsse eine Strömung des von dem Kanal geführten Mediums und in manchen Fällen auch eine erwünschte chemische Reaktion behindern. Daher wurden im Stand der Technik bereits verschiedene Wege eingeschlagen, um derartige unerwünschte Einschlüsse, beispielsweise Gaseinschlüsse, möglichst effektiv zu beseitigen. So ist es beispielsweise bekannt, ein strömbares Medium führende Kanäle in gattungsgemäßen Vorrichtungen mit zu einer Umgebung hin offenen Durchlassöffnungen zu versehen, die ein Ausgasen zulassen. Auch wurde der vergleichbare Weg eingeschlagen, ein Austreten eines die Einschlüsse bildenden Gases durch systembegrenzende gasdurchlässige Membranen zu ermöglichen. In beiden Fällen findet eine Entgasung an Orten statt, an denen die Einschlüsse auch entstehen. Das hat zur Folge, dass ein kompakter Aufbau entsprechender Vorrichtungen unmöglich oder erheblich erschwert wird, weil große freiliegende Flächen erforderlich sind.

Der vorliegenden Erfindung liegt nun die Aufgabe zugrunde, eine entsprechende Vorrichtung vorzuschlagen, die eine zügige und möglichst vollständige Entfernung von entstehenden Einschlüssen eines Fluids (bspw. eines Gases) erlaubt, auch wenn aufgrund eines erwünschten kompakten Aufbaus der Vorrichtung ein Transport der Einschlüsse über längere Strecken erforderlich ist. Der Erfindung liegt ferner die Aufgabe zugrunde, ein entsprechendes Verfahren zur Entfernen von Einschlüssen vorzuschlagen.

Diese Aufgabe wird erfindungsgemäß gelöst durch eine Vorrichtung mit den Merkmalen des Hauptanspruchs sowie durch ein Verfahren mit den Merkmalen des Anspruchs 11. Vorteilhafte Weiterentwicklungen und Ausgestaltungen der Erfindung ergeben sich mit den Merkmalen der Unteransprüche.

Bei einer hier vorgeschlagenen Vorrichtung mit einem ein strömbares Medium führenden Kanal, deren bestimmungsgemäßer Betrieb und/oder Wartung mit einer Bildung von Einschlüssen eines vom genannten Medium unterscheidbaren Fluids (typischerweise eines Gases, evtl. aber auch einer Flüssigkeit) in dem Kanal verbunden ist, lassen sich zunächst für jeden auf einer Längsrichtung des Kanals senkrecht stehenden Querschnitt des Kanals ein Flächeninhalt A und eine Umfangslänge 1 dieses Querschnitts sowie ein Flächeninhalt A' und eine Länge 1' einer Umfangslinie einer innerhalb dieses Querschnitts liegenden zusammenhän-' gen Fläche angeben, wobei die zuletzt genannte Fläche dadurch definiert ist, dass ein Verhältnis A'/1' einen - verglichen mit allen anderen in dem Querschnitt liegenden zusammenhängenden Flächen - maximalen Wert annimmt. Erfindungsgemäß ist der Kanal nun so ausgeführt, dass das Verhältnis A'/l' und/oder ein als A/l definiertes Verhältnis von Flächeninhalt zu Umfangslänge des Querschnitts des Kanals selbst und/oder, wenn sich bei einem Einschluss an einer durch den Querschnitt definierten Stelle des Kanals zwischen dem strömbaren Medium und dem den Einschluss bildenden Fluid an einer Kanalwand (5) ein Kontaktwinkel θ einstellt, dieser Kontaktwinkel θ und/oder, wenn θ > π/2 gilt, eine als -A/l und/oder eine als -A'/l' definierte Größe längs des Kanals zu einem Kanalausgang hin monoton zunimmt. Der auch als Randwinkel bezeichnete Kontaktwinkel θ sei dabei vorliegend so definiert, dass er vollständig im zuerst genannten strömbaren Medium außerhalb des Einschlusses (3) liegt, so dass also im Fall eines vollständig benetzenden strömbaren Mediums θ= 0 und für ein vollständig benetzendes die Einschlüsse bildendes Fluid θ = π gelten würde. Typische Ausführungen der Erfindung, bei denen die genannte Bedingung durch eine entsprechende Kanalgeometrie erfüllt wird, sehen vor, dass sign (cosθ) A/l und/oder sign(cosθ)A'/l' längs des Kanals zum Kanalausgang hin monoton zunimmt.

Die erfindungsgemäße Auslegung des typischerweise als Kapillare ausgeführten Kanals bringt es mit sich, dass auf einen Einschluss in dem Kanal Kapillarkräfte wirken, die ihn in vorteilhafter Weise zu dem Kanalausgang hin drängen. Dementsprechend sieht das erfindungsgemäße Verfahren zur Entfernung von Einschlüssen aus einer Vorrichtung mit einem ein strömbares Medium führenden Kanal, bei deren Betrieb und/oder Wartung sich ein Einschluss eines Fluids (bspw. eine Blase) in dem strömbaren Medium innerhalb des Kanals bildet, vor, dass der Einschluss durch Kapillarkräfte zu einem Kanalausgang hin bewegt wird. In gleicher Weise kann auch eine größere Zahl von Einschlüssen oder Blasen aus der Vorrichtung entfernt werden, wobei sich eine weitere vorteilhafte Wirkung dadurch erzielen lässt, dass ein in beschriebener Weise durch Kapillarkräfte bewegter Einschluss unterwegs weitere Blasen oder Einschlüsse, die unter Umständen selbst noch nicht groß genug sind, um entsprechenden Kapillarkräften ausgesetzt zu sein, mitnimmt, indem er sie in sich aufnimmt oder vor sich hertreibt. Auch kann eine durch Kapillarkräfte verursachte Bewegung von Einschlüssen beschriebener Art, beispielsweise eine entsprechende Blasenbewegung, einen unter Umständen erwünschten (zusätzlichen) Antrieb einer Strömung des vom Kanal geführten Mediums zur Folge haben.

Der genannte Randwinkel θ ergibt sich bei gegebenen Oberflächeneigenschaften der Kanalwand eindeutig aus dem vom Kanal geführten Medium und dem die Einschlüsse bildenden Fluid. Da dieses Fluid vorrichtungsspezifisch und daher bestimmbar ist (beispielsweise ein Dampf des strömbaren Mediums, wenn letzteres eine Flüssigkeit ist und die Einschlüsse durch Verdampfen entstehen, oder ein definiertes Reaktionsprodukt, das bei einem bestimmungsgemäßen Betrieb der Vorrichtung entsteht, oder Luft, wenn die Einschlüsse durch ein Füllen der Vorrichtung mit dem strömbaren Medium, insbesondere durch ein Nachfüllen des Mediums, erzeugt werden), ist also auch der Randwinkel θ bestimmbar und gegebenenfalls auch durch eine entsprechende Gestaltung der Kanalwand manipulierbar. Der Randwinkel θ kann also definiert ortsabhängig festgelegt werden kann. Dadurch, am einfachsten aber (und eventuell zusätzlich) durch eine Auslegung des Kanals mit einer sich längs des Kanals ändernden Geometrie, kann in einfacher Weise die erfindungsgemäß geltende Bedingung erfüllt werden, nach der das Verhältnis A'/l' und/oder das Verhältnis A/l und/oder θ und/oder, wenn θ >π/2 gilt, mindestens eine der Gröβen -A/l oder -A'/l' längs des Kanals zum typischerweise offen endenden Kanalausgang hin monoton zunimmt. In Frage kommen dazu ein sich längs des Kanals (also längs eines Verlaufs des Kanals) änderndes Profil und/oder eine sich längs des Kanals ändernde Querschnittsfläche und/oder eine sich längs des Kanals ändernde Umfangslänge des Kanals.

Eine bevorzugte Ausführung der Erfindung sieht dabei vor, dass zumindest eine(s) der genannten monoton zunehmenden Verhältnisse bzw. Größen streng monoton zunimmt, damit an jeder Stelle des Kanals in beschriebener Weise vorteilhafte Kapillarkräfte auf Einschlüsse wirken können. Mit Blick auf einen möglichst einfachen und platzsparenden Aufbau und möglichst günstige Strömungseigenschaften mit geringen Strömungswiderständen ist es ferner vorteilhaft, wenn sich die genannten Verhältnisse und Größen dabei längs des Kanals nur stetig ändern. Eine Entfernung von Einschlüssen, typischerweise ein Ausgasen, lässt sich dann besonders gut erreichen, wenn die zur Erzeugung der Kapillarkräfte monoton zunehmende Größe bis zum Kanalausgang streng monoton zunimmt.

Bei der genannten Vorrichtung handelt es sich um einen chemischen Reaktor oder Mikroreaktor oder einen Bestandteil eines solchen Reaktors oder Mikroreaktors. Insbesondere kann es sich bei der Vorrichtung um einen Stromabnehmer, eine Bipolarplatte, eine Brennstoffzelle, einen Brennstoffzellenstapel oder einen Bestandteil davon handeln. Dabei kann insbesondere ein Kühlmittelkanal und/oder ein Kanal für ein Reaktionsprodukt und/oder für einen Reaktanden oder einer Mischung mehrerer Reaktanden in beschriebener Weise ausgeführt sein. In diesen Fällen können beispielsweise Dampfblasen eines Kühlmittels oder Einschlüsse eines gasförmigen Reaktionsprodukts in beschriebener Weise aus einem entsprechenden System entfernt werden, indem gezielt Kapillarkräfte ausgenützt werden.

Durch eine erfindungsgemäße Auslegung des entsprechenden Kanals bildet dieser eine passive Struktur, durch die die beispielsweise als Blasen vorliegenden Einschlüsse derart geformt werden, dass eine Vorzugsrichtung entsteht, in welche sich die Einschlüsse (vorzugsweise ausschließlich) aufgrund der auftretenden Kapillarkräfte selbständig bewegen. Ein Transport der Einschlüsse kann in beschriebener Weise durch passive fluidische Strukturen bewirkt werden unter Ausnutzung natürlicher Kapillarkräfte des entsprechenden Fluids oder Gases, das in dem entsprechenden Kanal von dem im Kanal geführten Medium umgeben wird.

Die Erfindung sieht vor, dass der Kanal - selbstverständlich kann eine entsprechende Vorrichtung auch mehrere derart gestaltete Kanäle aufweisen - ein T-Profil oder ein T-Profil enthaltendes Profil hat und zumindest streckenweise an einer aktiven Fläche und/oder an einer katalytischen Membran oder einem anderen Katalysator, beispielsweise an einer Elektrolytmembran einer Brennstoffzelle oder einem daran anliegenden Katalysator, oder an einer daran angrenzenden Diffusionslage anliegend verläuft..Insbesondere kann streckenweise ein Teil der Kanalwand durch eine entsprechende Lage gebildet sein. In einem derartigen Kanal bilden sich typischerweise betriebsbedingt Einschlüsse, in der Regel Einschlüsse eines Reaktionsprodukts, die wiederum reaktionshinderlich sind, wenn sie nicht zügig abtransportiert werden, was durch die vorliegende Erfindung gewährleistet wird.

Insbesondere bei einer Verwendung derartiger Kanäle in Brennstoffzellenstapeln oder ähnlichen Stapelanordnungen chemischer Reaktoren und insbesondere chemischer Mikroreaktoren wird in besonders vorteilhafter Weise ein effektiver Abtransport von Einschlüssen bei einer besonders kompakten Geometrie der entsprechenden Vorrichtung erreicht. Dabei können die Kanäle in einfacher Weise so ausgeführt sein, dass sie in einer Ebene verlaufen, die durch eine Brennstoffzelle aufgespannt wird, um an einem Rand des Brennstoffzellenstapels zu enden. Die Einschlüsse werden dann durch die beschriebenen Kapillarkräfte bis zum Rand des Brennstoffzellenstapels transportiert, wo sie austreten können. Dadurch können viele Brennstoffzellen übereinander gestapelt werden, ohne dass die Entfernung der Einschlüsse behindert wird. Die Erfindung erlaubt auf diese Weise z.B. einen kompakten Aufbau von Brennstoffzellensystemen bei gleichzeitig effektiver Entgasung.

Erfahrungsgemäß erlauben insbesondere Kanäle mit einem T-Profil oder einem ein T-Profil enthaltenden Profil einen vorteilhaft widerstandsarmen Transport von Einschlüssen. Besonders vorteilhaft ist es, wenn der mindestens eine Kanal der Vorrichtung beschriebener Art nicht nur ein T-Profil oder ein ein T-Profil enthaltendes Profil aufweist, sondern zusätzlich ein Querbalken dieses Profils so ausgeführt ist, dass er sich zumindest zu einem Ende hin, vorzugsweise zu zwei Enden hin verjüngt. Dadurch kann erreicht werden, dass Blasen, die in einem Bereich des Querbalkens im Profil des Kanals entstehen, sich ebenfalls durch Kapillarkräfte angetrieben zu einer Stelle hin bewegen, an der ein weiterer Balken des Profils des Kanals am Querbalken ansetzt und von wo aus ein besonders guter Weitertransport der Blasen möglich ist. Alternativ oder zusätzlich kann es vorgesehen sein, dass sich der am Querbalken ansetzende weitere Balken des Profils vom Querbalken weg verbreitert. Dadurch kann erreicht werden, dass ein Einschluss durch Kapillarkräfte in diesen weiteren Balken hineinbewegt wird, so dass der Querbalken weitgehend von Einschlüssen freigehalten wird. Aus dem Gesagten ergibt sich, dass eine entsprechende Ausführung insbesondere dann von Vorteil ist, wenn der Querbalken des vom Kanal gebildeten oder im Kanal enthaltenen T-Profils an einer aktiven Fläche und/oder einer katalytischen Membran, einem anderen Katalysator oder einer Diffusionslage anliegend angeordnet ist. Eine Blasenbildung wird dann typischerweise hauptsächlich in einem durch den Querbalken definierten Bereich vorliegen, während ein Abtransport der Blasen weitgehend in einem Bereich des weiteren Balkens erfolgen kann, wodurch ein andernfalls durch die Blasen verursachtes Blockieren oder Behindern einer erwünschten chemischen Reaktion effektiv vermieden wird.

Bei dem Kanal wird es sich typischerweise um eine Kapillare handeln. Die beschriebenen vorteilhaften Effekte sind besonders ausgeprägt, wenn der Flächeninhalt A des Querschnitts des Kanals dabei Werte zwischen 25 000 µm² und 0,25 mm² und/oder ein größter Durchmesser dieses Querschnitts Werte zwischen 25 µm und 1 mm annimmt.

Eine erfindungsgemäß vorgesehene monotone Zunahme mindestens einer der Größen A'/l', A/l, θ, sign(cosθ)A'/l' oder sign(cosθ)A/l kann auf verschiedene Weise realisiert sein. Beispielsweise kann es vorgesehen sein, dass dazu der Flächeninhalt des Querschnitts des Kanals A und/oder der Flächeninhalt A' der genannten innerhalb des Querschnitts liegenden Fläche längs des Kanals monoton und vorzugsweise streng monoton und/oder stetig zum Kanalausgang hin zunimmt. Dabei kann der Kanal unter Umständen ein sich ähnlich bleibendes Profil aufweisen. Es ist aber auch möglich, dass das Profil eine sich ändernde Form aufweist und beispielsweise längs eines Verlaufs des Kanals gestreckt wird, so dass ein größter Durchmesser des Querschnitts des Kanals und/oder eine Abmessung dieses Querschnitts in einer auf jenem Durchmesser senkrecht stehenden Richtung längs des Verlaufs des Kanals monoton zunimmt. Es kann aber auch vorgesehen sein, dass sich das Profil des Kanals längs des Verlaufs des Kanals derart ändert, dass ein als A/l² und/oder ein als A'/l² definiertes.Verhältnis längs des Kanals monoton zunimmt. Das Profil wird in diesem Fall längs des Kanals bauchiger, wodurch eine Zunahme der Verhältnisse A/l und/oder A'/l' sogar nicht nur bei gleich bleibenden, sondern auch bei abnehmenden Flächeninhalten A bzw. A' möglich wird.

Querschnittsänderungen des Kanals der im vorhergehenden Absatz beschriebenen Art führen zu auf Einschlüsse einwirkenden Kapillarkräften gewünschter Orientierung, wenn θ einen Wert kleiner π/2 annimmt, also insbesondere dann, wenn es sich bei dem strömbaren Medium um ein benetzendes Medium, typischerweise um eine benetzende Flüssigkeit handelt. In dem weniger typischen Fall, dass θ einen Wert größer π/2 hat, wenn also beispielsweise das die Einschlüsse bildende Fluid benetzende Eigenschaften hat, kann es vorgesehen sein, dass die im vorhergehenden Absatz genannten Größen bzw. Verhältnisse längs des Kanals zum Kanalausgang hin monoton abnehmen anstatt zuzunehmen, wodurch dann eine monotone Zunahme der Größe sign(cosθ)A/l (in diesem Fall gleich -A/l) und/oder sign(cosθ)A'/l' (in diesem Fall gleich -A'/l') erreicht wird.

Alternativ oder zusätzlich zu Querschnittsänderungen der beispielhaft erläuterten Art können die erwünschten Kapillarkräfte auch dadurch hervorgerufen oder verstärkt werden, dass der Kanal Kanalwände mit sich längs des Kanals ändernden Oberflächeneigenschaften aufweist, so dass der Randwinkel θ einen sich längs des Kanals ändernden, vorzugsweise zum Kanalausgang hin zunehmenden Wert hat. Unter Umständen kann der Kanal dann auch einen längs seines Verlaufs gleich bleibenden Querschnitt haben. Die sich definiert ändernden Oberflächeneigenschaften können dazu beispielsweise durch eine sich längs des Kanals ändernde Beschichtung der Kanalwände realisiert werden. Sollte der Randwinkel innerhalb eines Querschnitts nicht konstant sein, sondern an verschiedenen Stellen der den Querschnitt begrenzenden Kanalwand unterschiedliche Werte annehmen, so sei θ in der vorliegenden Schrift stets als über die Umfangslänge gemittelter Wert des Randwinkels definiert.

Damit durch die vorliegende Erfindung Kapillarkräfte erzeugt werden, die hinreichend groß sind, um eine zügige Bewegung von Einschlüssen hervorzurufen und dabei auch Widerstandskräfte zu überwinden, ist es schließlich vorteilhaft, wenn zumindest eine der Gröβen A'/l', A/l, θ, sign(cosθ)A'/l' oder sign(cosθ)A/l längs einer Kanalstrecke von 5 mm um einen Faktor von mindestens 1,5, mit Blick auf eine einfach zu realisierende Geometrie vorzugsweise um einen Faktor von zwischen 2 und 3 zunimmt. Unter Umständen genügt aber bereits eine sehr geringe Querschnittsänderung, um die gewünschten Kapillarkräfte hinreichender Größe zu verursachen. Beispielsweise kann dazu eine Verkippung einer Kanalwand oder mehrerer Kanalwände um 0,001° (oder mehr) gegenüber einer Kanallängsrichtung und die damit verbundene Querschnittsänderung ausreichen.

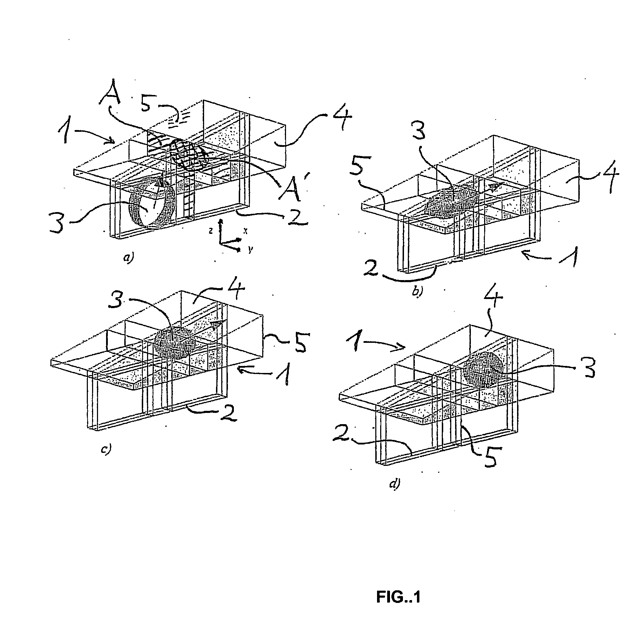

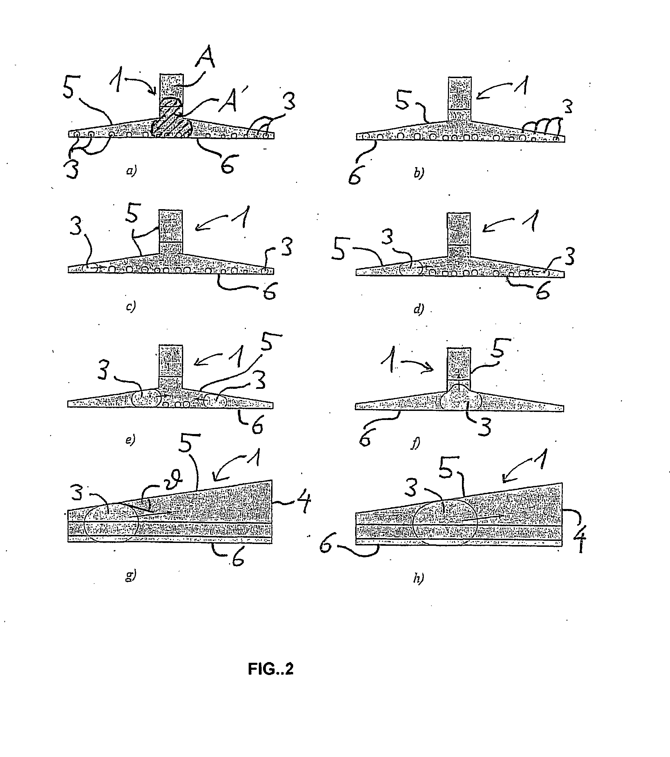

Ausführungsbeispiele der Erfindung werden im Folgen den anhand der Figuren 1 und 2 erläutert. Es zeigt
- Fig. 1: eine perspektivische Ansicht eines Kanalabschnitts aus einer erfindungsgemäßen Vorrichtung mit einem Einschluss zu vier aufeinander folgenden Zeitpunkten,
- Fig. 2: einen Querschnitt durch einen Kanal in einer anderen Ausführung der Erfindung mit Einschlüssen zu sechs aufeinander folgenden Zeitpunkten sowie eine Seitenansicht desselben Kanals mit einem Einschluss zu zwei aufeinander folgenden Zeitpunkten,
- Fig. 3: jeweils einen Längsschnitt durch einen Kanal aus zwei anderen Ausführungsbeispielen der Erfindung und
- Fig. 4: wiederum jeweils einen Längsschnitt durch zwei Kanäle weiterer Ausführungsbeispiele.

In Fig. 1 ist viermal der gleiche Kanal 1 abgebildet, der in einen selbst nicht abgebildeten chemischen Mikroreaktor integriert ist und dort mit einer in der Figur jeweils unten liegenden Seitenfläche 2 an einer katalytischen Membran anliegend angeordnet ist. Der Kanal 1 führt ein strömbares Medium, bei dem es sich vorliegenden Fall um eine Flüssigkeit handelt. Ein bestimmungsgemäßer Betrieb des chemischen Mikroreaktors ist mit einer Bildung von Gas an der katalytischen Membran verbunden, das an der Seitenfläche 2 in den Kanal 1 eintritt und dort Blasen bildet. Ein durch eine solche Blase gebildeter Einschluss 3 ist in der Fig. 1 in den mit a), b), c) und d) gekennzeichneten Abbildungen zu vier aufeinander folgenden Zeitpunkten dargestellt, wobei Abbildung b) einen 0,000755 s, die Abbildung c) einen 0,001175 s und die Abbildung d) einen 0,00301 s nach dem in Abbildung a) gezeigten Zeitpunkt wiedergibt.

Bei anderen, ähnlich ausgeführten Vorrichtungen könnten die Einschlüsse 3 auch durch ein Fluid gebildet sein, das von dem durch den Kanal 1 geführten Medium unterscheidbar ist. Auch wäre es möglich, dass jenes strömbare Medium nicht als Flüssigkeit, sondern als Gas vorläge. Im hier beschriebenen Fall handelt es sich bei dem strömbaren Medium um einen flüssigen Reaktanden, der dem Kanals 1 von einem in Fig. 1 jeweils links liegenden Ende zugeführt wird. An einem in Fig. 1 jeweils rechts liegend abgebildeten Ende des Kanals 1 weist dieser einen offen endenden Kanalausgang 4 auf, durch den das den Einschluss 3 bildende Gas in eine Umgebung des Mikroreaktors entweichen kann.

Der Kanal 1 hat einen Querschnitt, der ein T-Profil bildet, wobei die Seitenfläche 2 einen von einem Querbalken des T-Profils abstehenden weiteren Balken abschließt. Aufgrund von Kapillarkräften, die eine Minimierung einer Oberflächenenergie des Einschlusses 3 bewirken, steigt der an der Seitenfläche 2 gebildete Einschluss 3 zunächst auf bis zu einer Stelle, an der der genannte weitere Balken den Querbalken berührt, wodurch der Einschluss 3 von der an der Seitenfläche 2 anliegenden katalytischen Membran entfernt wird.

Zusätzlich weist nun der Kanal 1 eine Geometrie auf, die den Einschluss 3 in eine Form zwingt, in der wiederum Kapillarkräfte auf ihn wirken, die den Einschluss 3 längs des Kanals 1 zum Kanalausgang 4 hin bewegen. Diese Geometrie ist dadurch charakterisiert, dass ein Verhältnis A'/l' und ein Verhältnis A/l längs des Kanals 1 zum Kanalausgang 4 hin streng monoton und stetig zunehmen, wobei für jeden auf einer Längsrichtung des Kanals 1 senkrecht stehenden Querschnitt des Kanals 1 die Größe A als Flächeninhalt und die Größe 1 als Umfangslänge dieses Querschnitts definiert seien, während mit A' ein Flächeninhalt und mit 1' eine Länge einer Umfangslinie einer innerhalb dieses Querschnitts liegenden zusammenhängenden Fläche bezeichnet sei, wobei diese Fläche dadurch definiert ist, dass A'/l' verglichen mit allen anderen in dem Querschnitt liegenden zusammenhängenden Flächen einen maximalen Wert annimmt, wobei θ definiert ist als Randwinkel, der auf Höhe des jeweiligen Querschnitts an der Kanalwand 5 zwischen dem vom Kanal 1 geführten strömbaren Medium und dem die Einschlüsse 3 bildenden Gas (oder bei anderen Ausführungen der Erfindung flüssigen Fluid) einstellt und vollständig in dem erstgenannten strömbaren Medium liegt. Im vorliegenden Beispiel gilt θ<π/2, so dass insbesondere sign(cosθ) = +1 gilt und damit auch die Größen sign(cosθ)A'/l' und sign(cosθ)A/l längs des Kanals 1 zum offen endenden Kanalausgang 4 hin streng monoton und stetig zunehmen.

Die monotone Zunahme der genannten Größen bzw. Verhältnisse längs des Kanals 1 zum Kanalausgang 4 hin ist im vorliegenden Fall dadurch realisiert, dass der Flächeninhalt A des Querschnitts des Kanals 1 und damit auch der Flächeninhalt A' der genannten innerhalb des Querschnitts liegenden Fläche, die in guter Näherung der Fläche entspricht, die ein Einschluss 3 innerhalb des Querschnitts einzunehmen bestrebt ist, längs des Kanals monoton zunimmt. Erreicht wird eine Zunahme jener Flächen A und A' längs des Kanals 1 dabei dadurch, dass eine Abmessung des Querschnitts in einer zum Querbalken des erwähnten T-Profils senkrecht stehenden Richtung längs des Kanals 1 monoton zunehmend gestaltet ist, was durch eine im Verlauf des Kanals 1 zunehmende Streckung eines den Querbalken bildenden Teils des T-Profils in zum Querbalken senkrechter Richtung und eine damit verbundene Profiländerung realisiert wird. Der jeweils den Querbalken des T-Profils bildende Teil des Kanals 1 erhält dadurch eine Keilform. Es wären auch andere Geometrien des Kanals 1 denkbar, bei denen ein größter Durchmesser des Querschnitts des Kanals 1 und/oder eine Abmessung dieses Querschnitts in einer auf jenem Durchmesser senkrecht stehenden Richtung längs des Kanals 1 monoton zunimmt, um dadurch eine Bewegung von Einschlüssen 3 in eine Vorzugsrichtung durch Kapillarkräfte zu induzieren. Im vorliegenden Fall des Kanals 1 aus der Fig. 1 ergibt sich in beschriebener Weise eine Profiländerung, bei der auch ein als A/l² und ein als A'/l'² definiertes Verhältnis längs des Kanals 1 zum Kanalausgang 4 hin stetig und streng monoton zunimmt .

Schließlich wäre es auch möglich, die Kanalwand 5 des Kanals 1 alternativ oder zusätzlich zu einer Profiländerung mit sich längs des Kanals ändernden Oberflächeneigenschaften auszuführen, beispielsweise durch eine ortsabhängige Beschichtung, so dass der Randwin-, kel θ, der eine Funktion des die Einschlüsse 3 bildenden Gases, des vom Kanal 1 geführten strömbaren Mediums und der Oberflächeneigenschaften der Kanalwand 5 ist, einen sich längs des Kanals 1 ändernden Wert hat und dass die Einschlüsse 3 dadurch in eine Form gebracht werden, welche die die Einschlüsse 3 zum Kanalausgang 4 hin bewegenden Kapillarkräfte verursacht oder verstärkt.

Der in der Fig. 1 nicht maßstabsgetreu abgebildete Kanal ist ferner so dimensioniert, dass der Flächeninhalt A des Querschnitts des Kanals 1 an einem Kanalbeginn einen Wert von 25 000 µm² hat und über eine Strecke einer Länge von 0,7 mm längs des Kanals 1 gleichmäßig bis zu einem Wert von 95 000 µm² am Kanalausgang 4 zunimmt. Dabei hat der Kanal 1 eine durch eine Länge des Querbalkens des erwähnten T-Profils gegebene und im vorliegenden Fall konstante Breite von 500 µm. Möglich wäre auch eine entsprechende Gestaltung einer Kapillare, bei der eine Querschnittsänderung lediglich durch eine Verkippung mindestens einer der Kanalwände 5 um nur etwa 0,001° realisiert wird.

Bei einem Betrieb des Mikroreaktors, der den abgebildeten Kanal 1 enthält, entstehen die Einschlüsse 3, von denen in der Fig. 1 einer abgebildet ist, an der Seitenfläche 2, wobei das die Einschlüsse 3 bildende Gas eine aufgrund der vorrichtungsbedingt an der Seitenfläche 2 bzw. an der dort anliegenden katalytischen Membran stattfindenden Reaktion eindeutig festgelegte chemische Zusammensetzung hat. Damit ist auch der zuvor zur Beschreibung von Eigenschaften des Kanals 1 herangezogene Randwinkel θ festgelegt. Aufgrund der beschriebenen Geometrie des Kanals 1 werden die Einschlüsse 3 nun ausschließlich durch Kapillarkräfte angetrieben zu dem Kanalausgang 4 hin bewegt.

Ein ähnlicher Kanal 1, der zum Transport eines flüssigen Reaktanden in einer Bipolarplatte eines Brennstoffzellenstapels dient und ähnliche Abmessungen wie der zuvor beschriebene Kanal 1 hat, ist in der Fig. 2 als Querschnitt (Abbildungen a) bis f)) und als Seitenansicht (Abbildungen g) und g)) dargestellt. Der selbst nicht abgebildete Brennstoffzellenstapel besteht im vorliegenden Fall aus Direkt-Methanol-Brennstoffzellen, wobei der abgebildete Kanal 1 primär zum Transport von den genannten Reaktanden bildendem Methanol dient.

Der Kanal 1 hat wieder einen ein T-Profil bildenden Querschnitt, wobei ein in der Fig. 2 jeweils unten liegender Querbalken dieses T-Profils an einer als Katalysator dienenden und ihrerseits an einer Elektrolytmembran anliegenden Diffusionslage anliegt. Diese Diffusionslage bildet eine aktive Fläche 6, an der bei einem Betrieb des Brennstoffzellenstapels gasförmiges Kohlendioxid entsteht, welches von dem Methanol umgebene Einschlüsse 3 innerhalb des Kanals 1 bildet. Der Querbalken des T-Profils hat eine sich zu zwei Enden hin verjüngende Form, wobei mittig an dem Querbalken ein von der aktiven Fläche 6 weg weisender weiterer Balken absteht Die mit a) bis f) gekennzeichneten Abbildungen in der Fig. 2 veranschaulichen, dass diese Form des T-Profils zur Folge hat, dass sich die wachsenden Einschlüsse 3 aufgrund von Kapillarkräften zu dem genannten weiteren Balken hinbewegen, wobei größere Einschlüsse 3 unterwegs angetroffene kleinere Einschlüsse 3 in sich aufnehmen. Bei anderen Ausführungen der Erfindung kann vorgesehen sein, dass sich der erwähnte weitere Balken, der mittig am Querbalken des T-Profils ansetzt, vom Querbalken weg verbreitert, wodurch sich eine Bewegung der Einschlüsse 3 aufgrund von Kapillarkräften in den weiteren Balken des T-Profils hinein und damit von der aktiven Fläche 6 weg induzieren lässt. In ähnlicher Weise könnte der Kanal 1 in einer Abwandlung.der Erfindung auch mit einem L-Profil ausgeführt sein (das sich durch Weglassen einer Hälfte des Querbalkens ergäbe) mit einem an der aktiven Fläche 6 anliegenden Schenkel.

Wie bei dem zuvor beschriebenen Beispiel hat auch der in der Fig. 2 abgebildete Kanal 1 einen längs des Kanals 1 zu einem Kanalausgang 4 stetig und streng monoton zunehmenden Querschnitt A, wobei auch ein als A/l definiertes Verhältnis zum Kanalausgang 4 hin stetig und streng monoton zunimmt, wobei 1 als Umfangslänge des Querschnitts des Kanals 1 definiert ist. Die Einschlüsse 3 bilden mit einer Kanalwand 5 einen Randwinkel oder Kontaktwinkel θ mit einem kleinen Wert von zwischen O und π/2, weshalb die erwähnte Zunahme des Verhältnisses A/l und die damit verbundene Zunahme des Verhältnisses A'/l' (A' und l' seien wie zuvor im Zusammenhang mit Fig. 1 erläutert definiert) zur Folge hat, dass auf die Einschlüsse 3 diese zum Kanalausgang 4 hin bewegende Kapillarkräfte wirken. Die Zunahme des Querschnitts A und einer in beschriebener induzierte Bewegung eines Einschlusses 3 zum Kanalausgang 4 hin ist in den Abbildungen g) und h), die zwei aufeinander folgende Zeitpunkte wiedergeben, veranschaulicht. Dort ist auch an einer Stelle der Randwinkel θ eingezeichnet.

Ähnlich wie der hier beschriebene Kanal 1 kann auch ein Kühlmittelkanal ausgeführt sein, der ein flüssiges Kühlmittel führt und in dem sich bei einem Betrieb des Brennstoffzellenstapels oder eines anderen chemischen Mikroreaktors Dampfblasen des Kühlmittels bilden können. Auch können entsprechende Kanäle 1 nicht nur in Bipolarplatten, sondern auch in anderen Stromabnehmern beispielsweise von Brennstoffzellen angeordnet sein.

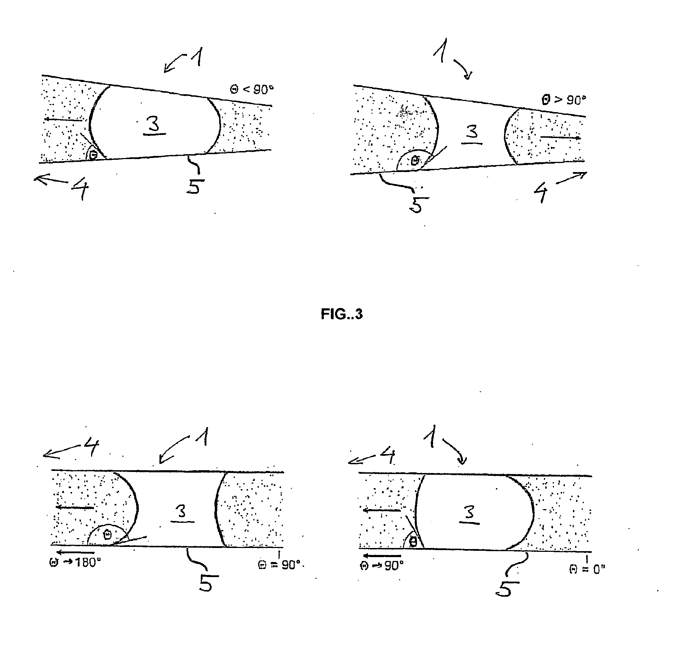

Die Figuren 3 und 4, in denen wiederkehrende Merkmale wieder mit den gleichen Bezugszeichen gekennzeichnet sind, veranschaulichen noch einmal die beschriebenen Effekte eines auf Kapillarkräfte zurückzuführenden Blasentransports. In Fig. 3 links ist ein Kanal 1 mit einem Einschluss 3 eines Fluids, der rechts und links von einem strömbaren Medium eingeschlossen ist, gezeigt. Der Kontaktwinkel θ, der als vollständig im strömbaren Medium außerhalb des Einschlusses 3 liegend definiert ist, ist hier kleiner als π/2, so dass eine Zunahme von A/l (und A'/l') zum Kanalausgang 4 (hier.nach links) hin einen Blasentransport in diese Richtung bewirkt. In der selben Figur 3 ist rechts ein anderer Kanal 1 aus einer anderen Vorrichtung abgebildet, in dem sich in ähnlicher Weise Einschlüsse 3 bilden, bei denen sich aber ein Kontaktwinkel θ einstellt, der größer als π/2 ist. Hier bewirkt eine Abnahme von A/l (und A'/l') zum Kanalausgang 4 (jetzt rechts liegend) hin, dass die Einschlüsse 3 dorthin bewegt werden.

Fig. 4 veranschaulicht an zwei Beispielen, links für θ > π/2 und rechts für θ < π/2, wie ein entsprechender Effekt auch bei gleichbleibendem Kanalquerschnitt durch ortsabhängige Werte von θ erreicht wird. In beiden Fällen bewirkt eine Zunahme von θ zum Kanalausgang 4 (jeweils links liegend) hin eine auf den jeweiligen Einschluss 3 wirkende Kraft, der diesen zum Kanalausgang 4 hin bewegt. In allen geschilderten Fällen kommt die Bewegung durch unterschiedliche Kapillardrücke an den zwei gegenüberliegenden Enden des jeweiligen Einschlusses 3 zustande, was sich in unterschiedlichen Krümmungen der die Einschlüsse begrenzenden Menisken widerspiegelt. Verursacht ist dieser Effekt bei den Beispielen aus Fig. 3 durch die Kanalgeometrie, bei den Beispielen aus Fig. 4 durch einen ortsabhängigen Kontaktwinkel θ, der durch eine sich längs des Kanals 1 ändernde Oberflächenbeschichtung der Kanalwand 5 realisiert sein kann. Selbstverständlich können die anhand der Figuren 3 und 4 beschriebenen Effekte auch (durch Kombination der Merkmale) überlagert werden.

Mit der vorliegenden Erfindung wird nach alledem insbesondere vorgeschlagen, geometrische Strukturen für den Transport von Gasblasen zu nutzen, indem die Geometrie fluidführender Kanäle 1 den jeweiligen Anforderungen entsprechend gestaltet wird. Wird beispielsweise eine Seitenwand 2 des Kanals 1 durch ein Membran gebildet, an der eine Reaktion abläuft, die beispielsweise Gas produziert, welches schnellstmöglich abgeführt werden soll, so kann die Kanalgeometrie dahingehend gestaltet werden, dass das Gas allein aufgrund von Kapillarkräften von der Membran abtransportiert wird. Strukturen der hier vorgestellten Art können also zum passiven Abtransport von Gasvolumina genutzt werden, wobei die Kanäle 1 eine Vorzugsrichtung vorgeben und zum passiven Transport auch über längere Strecken genutzt werden können. Zu einem Austrag der Gasblasen sind dabei keine von außen wirkenden Kräfte und damit auch keine entsprechenden externen Komponenten wie beispielsweise Pumpen erforderlich. Die Fign. 1 und 2 basieren auf numerischen Strömungssimulationen und zeigen, wie sich Gasvolumina, welche die Einschlüsse 3 bilden, aufgrund einer Minimierung von Oberflächenenergien jeweils in einen bestimmten Ausschnitt eines Querschnitts hineinbewegen und dort aufgrund unterschiedlicher Kapillardrücke in eine Bewegung entlang des Kanals 1 gezwungen werden. Diese Bewegung dauert typischerweise bis zu einem Ablösen des entsprechenden Gasvolumens von den Kanalwänden 5 an einem Kanalausgang 4 an, da dann ein energetisches Minimum erreicht wird.

Es wird also insbesondere vorgeschlagen, passive Systeme der hier beschriebenen Art zum Transport einer Einschlüsse 3 bildenden Phase (typischerweise Gas) in chemischen Reaktorsystemen einzusetzen. Typische Reaktoren, die für einen Einsatz solcher Strukturen geeignet sind, sind katalytische Reaktoren wie beispielsweise Brennstoffzellen mit katalytischen Membranen, an denen kontinuierlich Gasblasen entstehen. Durch einen zügigen Abtransport der Gasblasen wird damit ein Blockieren einer aktiven Membranfläche verhindert, indem diese Membranfläche leer geräumt wird. Die entstehenden Gasblasen sorgen dazu mit Hilfe der speziellen angepassten Geometrie der Kanäle 1 selbständig für eine typischerweise periodische Reinigung der Membranfläche von Gasblasen. Diese Methode gewährleistet eine maximale freie Reaktionsfläche, stellt eine selbsttätige Wiederbefüllung des Reaktors mit den entsprechenden Reaktanden sicher und bietet somit große Vorteile gegenüber dem Stand der Technik.

Die geometrischen Strukturen, durch die die erwünschten Kapillarkräfte zum passiven Transport der Blasen bildenden Phase hervorgerufen werden, können auch Stege und Verengungen umfassen oder durch solche realisiert sein. Die Geometrie soll dabei so beschaffen sein, dass die Blasen bildende Phase sich aufgrund der Geometrie und aufgrund von Oberflächenbeschaffenheiten der geometrischen Strukturen - angetrieben durch eine Oberflächenspannung der entstehenden Blasen - in eine Vorzugsrichtung bewegt, wobei ein Transport der Blasen typischerweise ausschließlich passiv, d.h. lediglich angetrieben durch die Kapillarkräfte an Phasengrenzen erfolgt.

Der mit der vorliegenden Anmeldung vorgeschlagene Erfindungsgegenstand lässt sich unter Verwendung des Begriffs des hydraulischen Durchmessers besonders einfach formulieren. Der hydraulische Durchmesser einer Querschnittsfläche sei dabei definiert als A/l, wenn diese Querschnittsfläche einen Flächeninhalt A und eine Umfangslänge 1 hat. Die weiter oben als A'/l' definierte Größe bezeichnet den größten einbeschreibbaren hydraulischen Durchmesser an der jeweiligen Stelle des Kanals. Der Gegenstand der vorliegenden Erfindung lässt sich damit beschreiben als Vorrichtung, bei der es sich um einen chemischen Reaktor oder Mikroreaktor oder einen Bestandteil davon handelt, mit einem ein strömbares Medium führenden Kanal, bei der ein bestimmungsgemäßer Betrieb und/oder eine Wartung der Vorrichtung mit einer Bildung von Einschlüssen eines vom genannten Medium unterscheidbaren Fluids (typischerweise eines Gases) in dem Kanal verbunden ist, wobei sich für jeden auf einer Längsrichtung des Kanals senkrecht stehenden Querschnitt ein hydraulischer Durchmesser des Kanals und ein größter einbeschreibbarer hydraulischer Durchmesser angeben lassen,
wobei die Vorrichtung insbesondere dadurch gekennzeichnet ist, dass
(a) der hydraulische Durchmesser des Kanals und/oder der größte einbeschreibbare hydraulische Durchmesser längs des Kanals zu einem Kanalausgang hin monoton zunimmt,
   oder dass
(b) sich bei einem Einschluss zwischen dem strömbaren Medium und dem den Einschluss bildenden Fluid an einer Kanalwand jeweils ein als vollständig im strömbaren Medium außerhalb des Einschlusses liegend definierter Kontaktwinkel θ einstellt und dieser Kontaktwinkel θ längs des Kanals zu einem Kanalausgang hin monoton zunimmt
   oder dass
(c) sich bei einem Einschluss zwischen dem strömbaren Medium und dem den Einschluss bildenden Fluid an einer Kanalwand ein als vollständig im strömbaren Medium außerhalb des Einschlusses liegend definierter Kontaktwinkel θ einstellt für den θ> π/2 gilt, und der hydraulische Durchmesser der Kanals oder der größte einbeschreibbare hydraulische Durchmesser längs des Kanals zu einem Kanalausgang hin monoton abnimmt. Dabei können die Merkmale (a) und (b) oder die Merkmale (b) und (c) auch zugleich realisiert sein.

Vorzugsweise sollte dabei ferner die jeweils bezeichnete Größe zum Kanalausgang hin streng monoton und/oder stetig zunehmen bzw. im letztgenannten Fall abnehmen. Besonders bevorzugt sind dabei Ausführungen der Erfindung, bei der sich die entsprechende Größe an jeder Stelle des Kanals bis zum genannten Kanalende - vorzugsweise kontinuierlich - in genannter Weise ändert.

Der zur Definition des Erfindungsgegenstands verwendete Kontaktwinkel θ ist dabei als Merkmal der Vorrichtung zu verstehen, da dieser Kontaktwinkel θ sich eindeutig aus Kanalwandmaterial, Art des strömbaren Mediums und Art des die Einschlüsse bildenden Fluids ergibt, wobei sich dieses Fluid wiederum vorrichtungsbedingt eindeutig bestimmen lässt. In einem typischen Fall wird es sich bei der Vorrichtung beispielsweise um eine Brennstoffzelle oder einen Bestandteil einer Brennstoffzelle (beispielsweise eine Bipolarplatte) handeln, wobei das strömbare Medium ein wiederum definiertes Kühlmittel oder ein Reaktand sein kann. Das die Einschlüsse bildende Fluid ist dann entweder ein von dem strömbaren Medium gebildeter Dampf (im ersten Fall) oder ein eindeutig definierbares Reaktionsprodukt (im zweitgenannten Fall). Die in einer Variante der Erfindung geforderte monotone Änderung des Kontaktwinkels θ längs des Kanals lässt sich damit vom Fachmann problemlos und ohne weiteres umsetzen in eine Anweisung darüber, wie die Kanalwand mit längs des Kanals sich ändernden Eigenschaften zu gestalten ist.

Den typischsten Fall wird allerdings die Ausführung der Erfindung bilden, bei der der hydraulische Durchmesser des Kanals und/oder der größte einbeschreibbare hydraulische Durchmesser längs des Kanals zu einem Kanalausgang hin monoton zunimmt, vorzugsweise streng monoton und/oder stetig.

## Patentansprüche

1. Vorrichtung mit einem ein strömbares Medium führenden Kanal (1), bei der es sich um einen chemischen Reaktor oder Mikroreaktor oder einen Bestandteil eines chemischen Reaktors oder Mikroreaktors handelt, wobei ein bestimmungsgemäßer Betrieb mit einer Bildung von Einschlüssen (3) eines vom genannten Medium unterscheidbaren Fluids in dem Kanal (1) verbunden ist,
wobei der Kanal (1) ein T-Profil oder ein ein T-Profil enthaltendes Profil hat und zumindest streckenweise an einer aktiven Fläche (6) und/oder an einer katalytischen Membran oder einem anderen Katalysator anliegend verläuft,
wobei sich für jeden auf einer Längsrichtung des Kanals (1) senkrecht stehenden Querschnitt des Kanals (1) ein hydraulischer Durchmesser des Kanals (1) und ein größter einbeschreibbarer hydraulischer Durchmesser angeben lassen
und wobei zum Bewegen der Einschlüsse (3) durch Kapillarkräfte zu einem Kanalausgang (4) hin
(a) der hydraulische Durchmesser des Kanals (1) und/oder der größte einbeschreibbare hydraulische Durchmesser längs des Kanals (1) zum Kanalausgang (4) hin monoton zunimmt
oder
(b) sich bei einem Einschluss (3) zwischen dem strömbaren Medium und dem den Einschluss (3) bildenden Fluid an einer Kanalwand (5) jeweils ein als vollständig im strömbaren Medium außerhalb des Einschlusses (3) liegend definierter Kontaktwinkel θ einstellt und dieser Kontaktwinkel θ längs des Kanals (1) zum Kanalausgang (4) hin monoton zunimmt
oder
(c) sich bei einem Einschluss (3) zwischen dem strömbaren Medium und dem den Einschluss (3) bildenden Fluid an einer Kanalwand (5) ein als vollständig im strömbaren Medium außerhalb des Einschlusses liegend definierter Kontaktwinkel θ einstellt, für den θ>π/2 gilt, und der hydraulische Durchmesser des Kanals (1) oder der größte einbeschreibbare hydraulische Durchmesser längs des Kanals (4) zum Kanalausgang (4) hin monoton abnimmt.

2. Vorrichtung nach Anspruch 1, **dadurch gekennzeichnet, dass** zumindest eines der genannten Verhältnisse und/oder zumindest eine der genannten monoton zunehmenden Größen streng monoton und/oder stetig zunimmt.

3. Vorrichtung nach einem der Ansprüche 1 oder 2, **dadurch gekennzeichnet, dass** sie einen Stromabnehmer, eine Bipolarplatte, eine Brennstoffzelle, einen Brennstoffzellenstapel oder einen Bestandteil davon bildet.

4. Vorrichtung nach einem der Ansprüche 1 bis 3, **dadurch gekennzeichnet, dass** der Kanal (1) ein Kühlmittelkanal oder ein Kanal (1) für ein Reaktionsprodukt und/oder einen Reaktanden ist.

5. Vorrichtung nach einem der Ansprüche 1 bis 4, **dadurch gekennzeichnet, dass** das T-Profil einen Querbalken aufweist, der sich zu mindestens einem Ende hin verjüngt und/oder an dem ein sich von dem Querbalken weg verbreiternder weiterer Balken ansetzt.

6. Vorrichtung nach einem der Ansprüche 1 bis 5, **dadurch gekennzeichnet, dass** das T-Profil einen an der aktiven Fläche (6) und/oder der katalytischen Membran oder dem Katalysator anliegenden Querbalken aufweist.

7. Vorrichtung nach einem der Ansprüche 1 bis 6, **dadurch gekennzeichnet, dass** der Flächeninhalt A des Querschnitts des Kanals (1) Werte zwischen 25 000 µm² und 0,25 mm² und/oder ein größter Durchmesser dieses Querschnitts Werte zwischen 25 µm und 1 mm annimmt.

8. Vorrichtung nach einem der Ansprüche 1 bis 7, **dadurch gekennzeichnet, dass** der Flächeninhalt A des Querschnitts des Kanals (1) längs des Kanals (1) monoton zunimmt.

9. Vorrichtung nach einem der Ansprüche 1 bis 8, **dadurch gekennzeichnet, dass** ein größter Durchmesser des Querschnitts des Kanals (1) und/oder eine Abmessung dieses Querschnitts in einer auf jenem Durchmesser senkrecht stehenden Richtung längs des Kanals (1) monoton zunimmt.

10. Vorrichtung nach einem der Ansprüche 1 bis 9, **dadurch gekennzeichnet, dass** der Kanal (1) Kanalwände (5) mit sich längs des Kanals (1) ändernden Oberflächeneigenschaften hat, so dass der Randwinkel θ einen sich längs des Kanals (1) ändernden Wert hat.

11. Verfahren zur Entfernung von Einschlüssen (3) aus einer Vorrichtung nach einem der Ansprüche 1 bis 10, wobei bei einem Betrieb der Vorrichtung zumindest ein Einschluss (3) eines Fluids oder Gases in dem strömbaren Medium innerhalb des Kanals (1) gebildet wird und der Einschluss (3) durch Kapillarkräfte zu einem Kanalausgang (4) hin bewegt wird.

## Claims

1. A device with a channel (1) leading a flowable medium, wherein it forms a chemical reactor or a micro-reactor or a component of a chemical reactor or micro-reactor, wherein a correct operation of the device entails a formation of inclusions (3) of a fluid which may be differentiated from the mentioned medium, in the channel (1),
wherein the channel (1) has a T-profile or a profile containing a T-profile and, at least over stretches, runs bearing on an active surface (6) and/or a catalytic membrane or on another catalyser,
wherein a hydraulic diameter of the channel (1) and a largest-inscribable hydraulic diameter can be defined at any cross-section defined perpendiculary to a longitudinal direction of the channel (1)
and wherein, for moving the inclusions (3) toward a channel exit (4) by capillary forces,
(a) the hydraulic diameter of the channel (1) and/or the largest-inscribable hydraulic diameter monotonically increases along the channel (1) toward the channel exit
or
(b) an inclusion (3) defines a contact angle θ between the flowable medium and the fluid forming the inclusion (3) at a channel wall (5), the contact angle θ being defined as lying completely in the flowable medium outside the inclusion (3), and the contact angle θ monotonically increases along the channel (1) toward tha channel exit (4)
or
(c) an inclusion (3) defines a contact angle θ between the flowable medium and the fluid forming the inclusion (3) at a channel wall (5), the contact angle θ being defined as lying completely in the flowable medium outside the inclusion (3) for which θ >π/2, and wherein the hydraulic diameter of the channel (1) or the largest-inscribable hydraulix diameter monotonically decreases along the channel (1) toward the channel exit (4).

2. A device according to claim 1, **characterized in that** at least one of the mentioned ratios and/or at least one of the mentioned, monotonously increasing variables increases in a strictly monotonous and/or continuous manner.

3. A device according to one of the claims 1 to 2, **characterized in that** it forms a current collector, a bipolar plate, a fuel cell, a fuel cell stack or a component thereof.

4. A device according to one of the claims 1 to 3, **characterized in that** the channel (1) is a coolant channel or a channel (1) for a reaction product and/or a reactant.

5. A device according to one of the claims 1 to 4, **characterized in that** the T-profile has a transverse bar which tapers towards at least one end and/or to which a further bar widening away from the transverse bar connects.

6. A device according to one of the claims 1 to 5, **characterized in that** the T-profile comprises a transverse bar bearing on the active surface (6) and/or on the catalytic membrane or the catalyser.

7. A device according to one of the claims 1 to 6, **characterized in that** the area content A of the cross-section of the channel (1) assumes values between 25 000 µm² and 0,25 mm² and/or a largest diameter of this cross-section assumes values between 25 µm and 1 mm.

8. A device according to one of the claims 1 to 7, **characterized in that** the area content A of the cross-section of the channel (1) monotonously increases along the channel (1).

9. A device according to one of the claims 1 to 8, **characterized in that** a largest diameter of the cross-section of the channel (1) and/or a dimension of this cross-section in a direction perpendicular to this diameter monotonously increase along the channel (1).

10. A device according to one of the claims 1 to 9, **characterized in that** the channel (1) has channel walls (5) with surface characteristics changing along the channel (1), so that the edge angle θ has a value changing along the channel (1).

11. A method for removing inclusions (3) from a device according to one of the claims 1 to 10, wherein on operation of the device, at least one inclusion (3) of a fluid or gas is formed in the flowable medium within the channel (1) and the inclusion (3) is moved towards a channel exit (4) by capillary forces.

## Revendications

1. Dispositif comportant un conduit (1) guidant un milieu qui peut s'écouler, dans lequel il s'agit d'un réacteur ou microréacteur chimique ou un élément d'un réacteur ou microréacteur chimique, une exploitation normale étant liée à la formation dans le conduit (1) d'inclusions (3) d'un fluide différentiable dudit milieu,
le conduit (1) ayant un profil en T ou un profil contenant un profil en T et s'étendant, au moins par endroits, en appui contre une surface active (6) et/ou contre une membrane catalytique ou un autre catalyseur,
étant possible d'indiquer un diamètre hydraulique du conduit (1) et un diamètre hydraulique inscrit maximum pour chaque section transversale du conduit (1) située perpendiculairement à une direction longitudinale du conduit (1),
et pouvant déplacer les inclusions (3) vers une sortie (4) du conduit sous l'effet de forces capillaires
(a) le diamètre hydraulique du conduit (1) et/ou le diamètre hydraulique inscrit maximum augmente(nt) de manière monotone le long du conduit (1) vers la sortie (4) du conduit,
ou
(b) dans le cas d'une inclusion (3) entre le milieu qui peut s'écouler et le fluide formant l'inclusion (3), il se forme à chaque fois sur une paroi (5) du conduit un angle de contact θ défini comme étant situé totalement dans le milieu qui peut s'écouler en dehors de l'inclusion (3), et ledit angle de contact θ augmente de manière monotone le long du conduit (1) vers la sortie (4) du conduit,
ou
(c) dans le cas d'une inclusion (3) entre le milieu qui peut s'écouler et le fluide formant l'inclusion (3), il se forme sur une paroi (5) du conduit un angle de contact θ défini comme étant situé totalement dans le milieu qui peut s'écouler en dehors de l'inclusion, pour lequel θ >π/2, et le diamètre hydraulique du conduit (1) ou le diamètre hydraulique inscrit maximum diminue de manière monotone le long du conduit (4) vers la sortie (4) du conduit.

2. Dispositif selon la revendication 1, **caractérisé en ce qu'**au moins un desdits rapports et/ou au moins une desdites grandeurs augmentant de manière monotone augmentent de manière strictement monotone et/ou en continu.

3. Dispositif selon la revendication 1 ou 2, **caractérisé en ce qu'**il forme un récepteur de courant, une plaque bipolaire, une cellule de combustible, une pile de cellules de combustible ou un élément de ceux-ci.

4. Dispositif selon l'une quelconque des revendications 1 à 3, **caractérisé en ce que** le conduit (1) est un conduit pour liquides de refroidissement ou un conduit (1) pour un produit de réaction et/ou un réactant.

5. Dispositif selon l'une quelconque des revendications 1 à 4, **caractérisé en ce que** le profil en T comporte une barre transversale qui se rétrécit au moins à une extrémité et/ou laquelle se prolonge par une autre barre s'élargissant en s'éloignant de ladite barre transversale.

6. Dispositif selon l'une quelconque des revendications 1 à 5, **caractérisé en ce que** le profil en T comporte une barre transversale en appui contre la surface active (6) et/ou contre la membrane catalytique ou le catalyseur.

7. Dispositif selon l'une quelconque des revendications 1 à 6, **caractérisé en ce que** la superficie A de la section transversale du conduit (1) accepte des valeurs entre 25 000 µm² et 0,25 mm² et/ou un diamètre maximum de ladite section transversale accepte des valeurs entre 25 µm et 1 mm.

8. Dispositif selon l'une quelconque des revendications 1 à 7, **caractérisé en ce que** la superficie A de la section transversale du conduit (1) augmente de manière monotone le long du conduit (1).

9. Dispositif selon l'une quelconque des revendications 1 à 8, **caractérisé en ce qu'**un diamètre maximum de la section transversale du conduit (1) et/ou une dimension de ladite section transversale dans une direction perpendiculaires au diamètre augmente(nt) de manière monotone le long du conduit (1).

10. Dispositif selon l'une quelconque des revendications 1 à 9, **caractérisé en ce que** le conduit (1) comporte des parois (5) dont les propriétés superficielles varient le long du conduit (1), de telle sorte que l'angle de bord θ a une valeur variant le long du conduit (1).

11. Procédé permettant d'éliminer des inclusions (3) hors d'un dispositif selon l'une quelconque des revendications 1 à 10, dans lequel procédé, pendant le fonctionnement dudit dispositif, se forme au moins une inclusion (3) d'un fluide ou gaz dans le milieu qui peut s'écouler à l'intérieur du conduit (1) et l'inclusion (3) se déplace sous l'effet de forces capillaires vers une sortie (4) du conduit.
